Europäisches Patentamt

European Patent Office

Office européen des brevets

(19)

(11) Numéro de publication: **0 022 707**
**B1**

(12) **FASCICULE DE BREVET EUROPEEN**

(45) Date de publication du fascicule du brevet: **23.11.83**

(51) Int. Cl.³: **C 21 D 9/60, H 05 B 6/10**

(21) Numéro de dépôt: **80401014.8**

(22) Date de dépôt: **03.07.80**

(54) Dispositif de chauffage par induction de produits longs et minces en défilement continu.

(30) Priorité: **09.07.79 FR 7917717**

(43) Date de publication de la demande:
**21.01.81 Bulletin 81/3**

(45) Mention de la délivrance du brevet:
**23.11.83 Bulletin 83/47**

(84) Etats contractants désignés:
**AT BE DE GB IT SE**

(56) Documents cités:
**DE - C - 474 140**
**DE - C - 971 925**
**FR - A - 1 292 053**
**FR - A - 1 323 071**
**FR - A - 1 387 653**
**FR - A - 1 453 348**
**GB - A - 420 143**
**US - A - 2 652 478**
**US - A - 3 000 106**

(73) Titulaire: **CEM COMPAGNIE ELECTRO
MECANIQUE Société anonyme dite:
12, rue Portalis
F-75008 Paris (FR)**

(72) Inventeur: **Pouillange, Jean-Paul
3, Allée des Roseaux
F-93600 Aulnay-Sous-Bois (FR)**
Inventeur: **Chausse, Bernard
7, rue René Roeckel
F-92340 Bourg La Reine (FR)**
Inventeur: **Gaydon, Jean-Pierre
42, Avenue de l'Europe
F-78160 Marly-Le-Roy (FR)**

(74) Mandataire: **Rinuy, Guy et al.
14, Avenue de la Grande Armée
F-75017 Paris (FR)**

Courier Press, Leamington Spa, England.

## Dispositif de chauffage par induction de produits longs et minces en défilement continu

La présente invention concerne un dispositif de chauffage par induction électromagnétique de produits longs et minces, en défilement continu, en particulier de produits métalliques minces en bande, tels que les tôles et les feuillards.

On sait que le chauffage par induction de produits métalliques est déjà largement utilisé industriellement.

Toutefois, il est limité aux produits de taille modeste ne dépassant pas les dimensions des billettes d'acier et réservé au traitement discontinu de pièces isolées.

Les produits longs et minces, tels que les tôles, sont généralement chauffés en continu dans des fours à fuel ou à gaz.

La constante de temps de chauffage impose souvent une durée de passage dans le four assez longue et donc une grande longueur à l'intérieur du four ce qui en augmente notoirement les dimensions.

La nécessité d'une vitesse de traversée régulière impose de prévoir des dispositifs permettant un processus continu tels que des magasins de bande, qui, eux aussi, contribuent à accroître les dimensions de l'équipement d'ensemble.

Par ailleurs, le rendement énergétique de ces fours est quelquefois médiocre.

Les dispositifs de chauffage à induction les plus courants utilisent des inducteurs bobinés fixes engendrant des champs magnétiques variables qui consomment beaucoup d'énergie réactive et exigent donc, eu égard aux puissances élevées mises en oeuvre, des dispositifs de compensation tels que des batteries de condensateurs.

Les courants nécessaires entraînent également d'importantes pertes supplémentaires par effet Joule qui dégradent sensiblement le rendement des installations et compromettent donc leur rentabilité.

On connaît notamment par le brevet US—A 2.652.478 un dispositif de chauffage par induction dans lequel un tambour de support en matière réfractaire comporte des moyens d'amenée, de support et de guidage de la bande à chauffer de manière à former une boucle, mais ce dispositif fait appel à des bobines fixes, extérieures, alimentées en courant alternatif.

On connaît également par le brevet FR—A 1.323.071 un dispositif de chauffage par induction. Dans ce dispositif un rouleau creux comporte des pôles aimantés d'un inducteur disposés autour d'un axe situés approximativement au centre. Ce dispositif ne permet qu'un chauffage indirect par conduction d'un produit qui est en contact avec ce rouleau.

L'objet de l'invention est de réaliser le chauffage en continu par induction, notamment de tôles ou de feuillards, en appelant le minimum d'énergie réactive et avec un rendement très supérieur au rendement des procédés existants.

La présente invention vise un dispositif de chauffage par induction en continu d'un produit métallique en bande formant l'élément d'induit, en défilement continu sur un tambour de support en matière réfractaire, comportant des moyens d'amenée, de support et de guidage de la bande de manière à former au moins une boucle, plusieurs pôles aimantés d'un inducteur étant disposés autour d'un axe situé approximativement au centre de la courbure de la boucle, les surfaces polaires étant parallèles aux génératrices de ladite boucle, dispositif caractérisé en ce que le tambour de support est creux et loge un inducteur magnétique produisant des champs magnétiques invariables et que la boucle est sensiblement circulaire, le dispositif comportant un organe d'entraînement en rotation de l'inducteur de manière à produire un déplacement relatif entre l'inducteur et le produit métallique à chauffer, des moyens étant destinés à assurer le retour du flux autour et à travers la boucle.

La présente invention, en utilisant des champs magnétiques invariables déplacés mécaniquement, réduit considérablement la consommation d'énergie réactive et améliore notablement le rendement.

La présente invention, en associant étroitement dans sa conception les organes de chauffage et les organes de guidage et d'entraînement des produits à chauffer, permet un chauffage rapide des produits longs et minces autorisant son insertion dans un processus continu rapide. Or la vitesse est un facteur important, notamment pour le recuit des tôles, et le dispositif selon l'invention permet d'obtenir une vitesse élevée car il dispose d'une puissance de chauffage très importante.

Le champ magnétique invariable est produit par des aimants permanents ou des électro-aimants alimentés en continu.

Le principe de déplacement de ce champ peut être de type hétéropolaire, les aimants ou les électro-aimants étant dans ce cas entraînés en rotation, ou de type homopolaire, un rotor à réluctance variable placé dans le champ d'une bobine axiale étant alors entraîné en rotation.

A titre d'exemple non limitatif, on peut utiliser un moteur électrique à vitesse fixe ou variable, entraînant un rotor sur lequel sont disposés une ou plusieurs paires d'aimants ou d'électro-aimants.

Un avantage important de l'installation est de ne pas imposer l'occultation systématique des parois latérales du tambour de chauffage en continu, permettant l'engagement et le dégagement du produit, des visites fréquentes et un entretien facile de l'installation ainsi qu'une ventilation axiale très efficace de l'intérieur du tambour.

Il va de soi qu'on peut installer plusieurs unités de chauffage successives si les contraintes techniques de l'utilisateur l'imposent.

L'invention sera décrite plus en détail en regard des dessins annexés à titre d'exemples nullement limitatifs et sur lesquels:

la figure 1 est une coupe transversale selon I—I de la figure 2 d'une unité de chauffage selon l'invention;

la figure 2 est une vue en élévation, partiellement en coupe selon II—II, de la figure 1 de l'unité de chauffage selon l'invention; et

la figure 3 est une coupe transversale d'un dispositif selon l'invention comportant deux unités de chauffage associées.

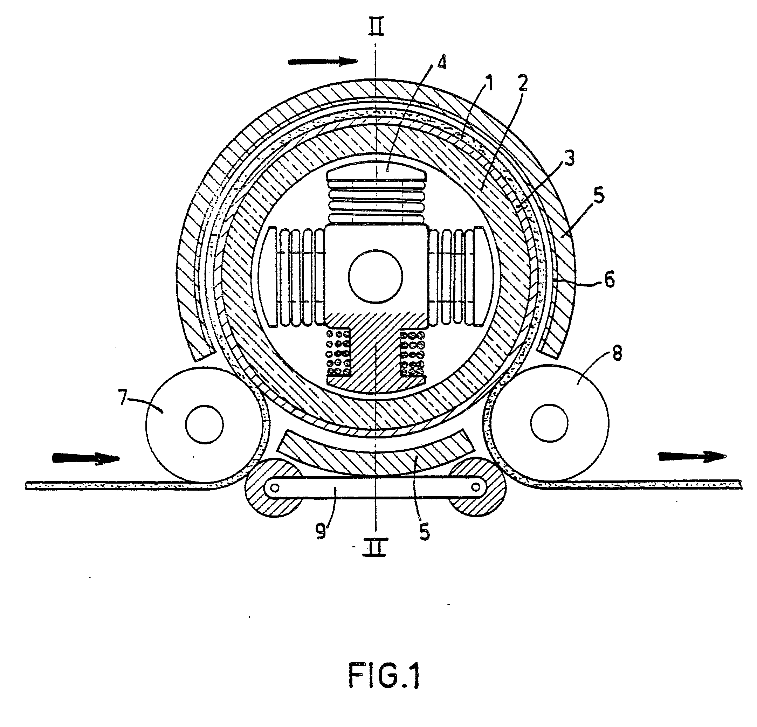

Comme représenté sur la figure 1, le produit long et mince 1 est guidé vers un tambour 2 de l'unité de chauffage par l'intermédiaire d'un galet 7 (et éventuellement d'autres galets non représentés) et guidé vers l'extérieur par l'intermédiaire du galet 8 (et éventuellement d'autres galets non représentés). Il forme ainsi une boucle approximativement circulaire et se déplace dans le sens indiqué par les flèches sur la figure 1.

Le tambour 2 est en matériau isolant électriquement, réfractaire et à bonne tenue mécanique, par exemple en béton, éventuellement armé et refroidi de façon convenable en ménageant des canaux selon des génératrices. Dans le mode de réalisation représenté, il est ceinturé d'une mince couronne 3 en matériau à très bonne tenue mécanique, comme par exemple, de l'acier réfractaire. Cette couronne peut tourner autour de son axe.

A l'intérieur du tambour 2 on dispose un rotor inducteur 4 disposé coaxialement audit tambour et constitué par une succession de pôles aimantés radiaux dont les épanouissements, c'est-à-dire les surface polaires, sont parallèles aux génératrices du tambour 2. Les pôles de l'inducteur peuvent être constitués par des aimants permanents ou par des électro-aimants parcourus par un courant continu, de polarité alternée. Bien entendu, il est possible de faire varier l'intensité du courant continu parcourant les électro-aimants.

Ce rotor 4 est entraîné en rotation par un moteur à vitesse fixe ou variable de manière à produire un déplacement relatif entre le produit à chauffer et le champ magnétique invariable.

Le nombre de pôles est à déterminer pour chaque installation en fonction des performances demandées.

Dans un mode de réalisation non représenté, il est possible d'obtenir un déplacement des champs magnétiques invariables à l'aide d'une machine homopolaire, les pôles de l'inducteur ayant tous la même polarité, des moyens de production du champ étant prévus en dehors de la zone d'action des pôles.

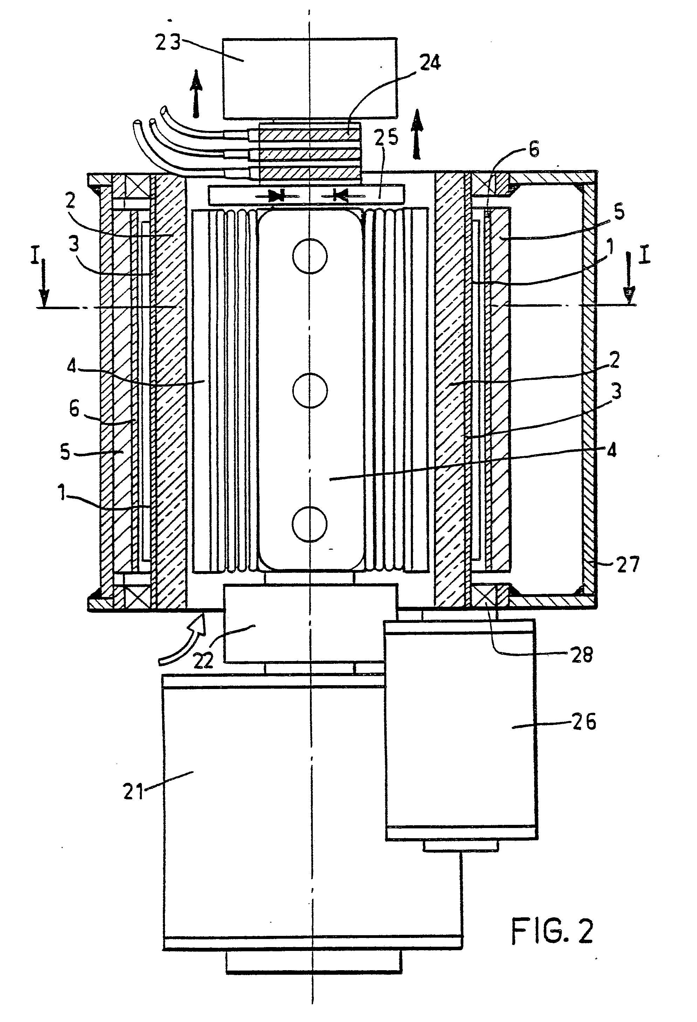

Pour éviter les dispersions de flux magnétique on dispose autour du tambour, et en ménageant un entrefer convenable, une culasse en matériau magnétique 5, éventuellement protégée thermiquement par un film réfractaire 6. La culasse représentée sur les figures 1 et 2 est sensiblement cylindrique, interrompue pour permettre le passage de la bande 1 et le logement des rouleaux de guidage 7 et 8. De façon avantageuse la culasse peut être en tôle feuilletée.

Pour refermer électriquement les boucles des courants induits dans le produit, et éviter une discontinuité brutale de chauffage à l'entrée et à la sortie du dispositif, on peut également prévoir un shunt électrique 9 en matériau électriquement bon conducteur. Sur la figure 1, ce shunt 9 est constitué par deux galets reliés par une tige et prenant appui sur le produit respectivement à l'entrée et à la sortie du dispositif.

Pour faciliter l'engagement du produit, son dégagement ainsi que pour équilibrer les tractions engendrées par les inducteurs tournants, on peut entraîner les galets 7 et 8 en rotation à l'aide de moteurs par exemple. On peut même prévoir d'entraîner le tambour 2 par un moteur électrique qui, en jouant le rôle de moteur-frein, contribuera à équilibrer le couple d'entraînement engendré par le mouvement des inducteurs.

La figure 2 montre les dispositifs d'entraînement des différents éléments du dispositif de chauffage.

Le rotor inducteur 4, supporté par des paliers 22 et 23, et entraîné à vitesse fixe ou variable, par un moteur 21 est alimenté en courant continu, par example par un système à bagues-balais 24 et diodes tournantes 25 (représenté schématiquement sur la figure) alimenté en courant triphasé sur l'exemple représenté.

On a également représenté sur la figure 2 un moteur 26 d'entraînement du galet 8 ainsi que le châssis métallique fixe 27 supportant le tambour par l'intermédiaire de paliers 28.

Les flèches représentées montrent le sens de circulation du fluide de refroidissement du rotor et du tambour.

Ce dispositif de chauffage est utilisé de façon avantageuse pour le chauffage de produits métallurgiques minces en bande. Dans ce cas, c'est le produit lui-même qui sert d'induit.

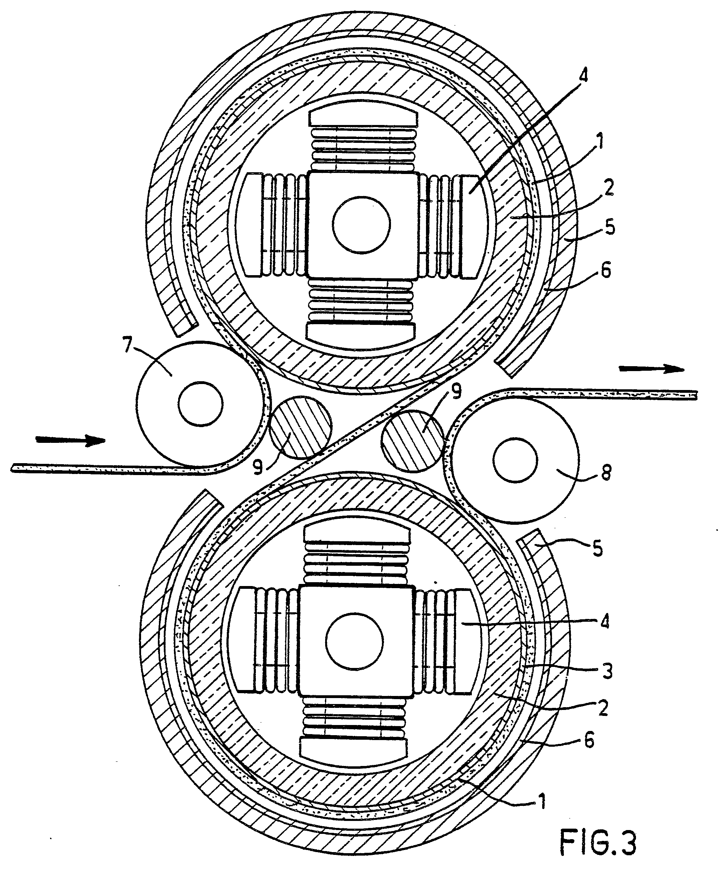

La figure 3 représente un second mode de réalisation du dispositif selon la présente invention dans lequel on a associé deux unités de chauffage identiques pour un même produit continu 1. Les deux unités sont disposées de manière à ce que la bande forme deux boucles symétriques par rapport à un axe central suivant une génératrice de la bande et situé approximativement sur le trajet de celle-ci.

Le dispositif comporte donc deux tambours 2 dans lesquels tournent des inducteurs 4, la bande 1 passant successivement autour de chacun des tambours en suivant un trajet sensiblement en forme de 8.

On remarquera les avantages de cet agencement et, en particulier, sa compacité, la présence de deux galets d'entraînement 7 et 8 seulement et la possibilité de travailler avec des tractions d'entrée et de sortie très réduites. En effet, dans la disposition représentée, les inducteurs tournant dans le même sens et étant opposés, les couples d'entraînement qu'ils imposent à la bande se compensent.

Dans le cas où le dispositif est utilisé pour le recuit de tôles il peut être particulièrement intéressant d'imposer une certaine traction à la tôle pendant le recuit de manière à éliminer les contraintes de laminage. Pour cela on règle les vitesses des deux moteurs d'entraînement des inducteurs de manière à ce qu'elles soient légèrement différentes.

Le déplacement de la bande à une vitesse voulue peut alors être provoqué par une légère dissymétrie dans les vitesses de rotation des deux inducteurs.

Comme précédemment un shunt électrique 9, constitué par des galets conducteurs, assure la fermeture des boucles de courants induits dans les spires du produit et une culasse 5 en matériau magnétique entourant les tambours 2 évite les dispersions de flux magnétique.

Il est possible de remplacer le tambour en matière réfractaire par un tambour en métal amagnétique constitué par un empilage de disques collés ou assemblés de toute manière connue. Ce tambour amagnétique est donc perméable au flux, mais sa constitution empêche la fermeture des courants induits. Il peut éventuellement être recouvert d'une couche isolante thermiquement.

## Revendications

1. Dispositif de chauffage par induction en continu d'un produit métallique en bande (1) formant l'élément d'induit, en défilement continu sur un tambour de support en matière réfractaire (2), comportant des moyens d'amenée, de support et de guidage (2, 7, 8) de la bande de manière à former au moins une boucle, plusieurs pôles aimantés d'un inducteur (4) étant disposés autour d'un axe situé approximativement au centre de la courbure de la boucle, les surfaces polaires étant parallèles aux génératrices de ladite boucle, dispositif caractérisé en ce que le tambour de support (2) est creux et loge un inducteur magnétique (4) produisant des champs magnétiques invariables et que la boucle est sensiblement circulaire, le dispositif comportant un organe (21) d'entraînement en rotation de l'inducteur de manière à produire un déplacement relatif entre l'inducteur et le produit métallique à chauffer, des moyens (5) étant destinés à assurer le retour du flux autour et à travers la boucle.

2. Dispositif selon la revendication 1, caractérisé en ce que les pôles de l'inducteur sont des aimants permanents de polarité alternée.

3. Dispositif selon la revendication 1, caractérisé en ce que les pôles de l'inducteur sont des électro-aimants de polarité alternée parcourus par un courant continu pouvant varier.

4. Dispositif selon l'une quelconque des revendications 1 à 3, caractérisé en ce que le tambour réfractaire (2) est entraîné par un moteur servant de frein.

5. Dispositif selon l'une quelconque des revendications 1 à 4, caractérisé en ce que les moyens destinés à assurer le retour du flux sont constitués par une culasse (5) cylindrique externe en tôle feuilletée, interrompue pour permettre le passage de la bande (1) et le logement de rouleaux de guidage (7, 8).

6. Dispositif de chauffage par induction en continu d'un produit en bande, caractérisé en ce qu'il comporte deux dispositifs selon l'une quelconque des revendications 1 à 5, disposés symétriquement de manière à ce que la bande suive un trajet sensiblement en forme de 8, les deux inducteurs tournant dans le même sens.

7. Dispositif selon la revendication 6, caractérisé en ce que les inducteurs sont entraînés en rotation à des vitesses légèrement différentes.

## Patentansprüche

1. Vorrichtung zur Induktionserhitzung eines bandförmigen Metallgegenstandes (1), der das zu induzierende Element bildet und kontinuierlich an einer Stütztrommel (2) aus hitzebeständigem Material vorbeigeführt wird, mit Leit-, Stütz- und Führungseinrichtungen (2, 7, 8) für das Band zur Bildung mindestens einer Schleife, mit mehreren Magnetpolen eines Induktors (4) die um eine annähernd am Krümmungsmittelpunkt der Schleife gelegene Achse verteilt sind, und deren Polflächen parallel zur Hüllfläche der Schleife angeordnet sind, dadurch gekennzeichnet, daß die Stütztrommel (2) hohl ist und einen Magnet-Induktor (4) zur Erzeugung von magnetischen Gleichfeldern enthält, und daß die Schleife im wesentlichen kreisförmig ist, daß die Vorrichtung ein Organ (21) zum Drehantrieb des Induktors in der Weise enthält, daß eine Relativverschiebung zwischen dem Induktor und dem aufzuheizenden Metallgegenstand erzeugt wird, und daß Einrichtungen (5) zur Rückführung des Magnetflusses über die und quer zur Schleife vorgesehen sind.

2. Vorrichtung nach Anspruch 1, dadurch gekennzeichnet, daß die Pole des Induktors Permanentmagnete mit alternierender Polarität sind.

3. Vorrichtung nach Anspruch 1, dadurch gekennzeichnet, daß die Pole des Induktors durch einen veränderbaren Gleichstrom erregte Elektromagnete mit alternierender Polarität sind.

4. Vorrichtung nach einem der Ansprüche 1—3, dadurch gekennzeichnet, daß die aus hitzebeständigen Material bestehende Trommel (2) durch einen Bremsmotor angetrieben ist.

5. Vorrichtung nach einem der Ansprüche 1—4, dadurch gekennzeichnet, daß die Einrichtung zur Rückführung des Magnetflusses durch einen zylindrischen Außenmantel (5) aus Schichtblechen gebildet ist, wobei Unterbrechungen zum Durchlaß des Bandes (1) und zum Anbringen von Führungsrollen vorgesehen sind.

6. Vorrichtung zur kontinuierlichen Induktionserhitzung eines bandförmigen Gegenstandes, dadurch gekennzeichnet, daß zwei Einzelvorrichtungen nach einem der Ansprüche 1—5 symmetrisch zueinander so angeordnet sind, daß die Bandbahn im wesentlichen in Form einer 8 verläuft, wobei sich die beiden Induktoren in gleicher Richtung drehen.

7. Vorrichtung nach Anspruch 6, dadurch gekennzeichnet, daß die Induktoren mit leicht unterschiedlicher Geschwindigkeit in Drehung versetzt sind.

**Claims**

1. A device for continuous inductive heating of a metallic web product (1) forming the armature element, continuously running on a support drum of refractory material (2), comprising means for supplying, supporting and guiding (2, 7, 8) the web so as to form at least one loop, several magnetized poles of an inductor (4) being disposed about an axis approximately situated at the center of curvature of the loop, the polar surfaces being parallel to the generatrices of said loop, said device being characterized in that the supporting drum (2) is hollow and houses a magnetic inductor (4) producing invariable magnetic fields and in that the loop is substantially circular, the device comprising a member (21) for rotatably driving the inductor so as to produce relative motion between the inductor and the metallic product to be heated, means (5) being provided for returning the flux about and through the loop.

2. A device according to claim 1, characterized in that the inductor poles are permanent magnets of alternate polarity.

3. A device according to claim 1, characterized in that the inductor poles are electromagnets of alternate polarity with a variable direct current flowing therein.

4. A device according to any one of claims 1 to 3, characterized in that the refractory drum (2) is driven by a motor acting as a brake.

5. A device according to any one of claims 1 to 4, characterized in that the means for returning the flux consists of an outer cylindric yoke (5) of sheet metal interrupted for permitting the web (1) to pass therethrough and guiding rollers (7, 8) to be housed thereat.

6. A device for continuous inductive heating of a web product, characterized in that it comprises two devices according to any one of claims 1 to 5, symmetrically disposed so that the web follows a substantially 8-shaped path, with both inductors rotating in the same direction.

7. A device according to claim 6, characterized in that the inductors are driven into rotation at slightly different speeds.

FIG.1

FIG. 2

0 022 707

FIG.3